(19) Europäisches Patentamt
European Patent Office
Office européen des brevets

(11) **EP 0 603 585 B1**

(12) **EUROPÄISCHE PATENTSCHRIFT**

(45) Veröffentlichungstag und Bekanntmachung des Hinweises auf die Patenterteilung:
**09.02.2000 Patentblatt 2000/06**

(51) Int. Cl.$^{7}$: **G02B 1/10**

(21) Anmeldenummer: **93119085.4**

(22) Anmeldetag: **26.11.1993**

(54) **Optisches Bauelement, Verfahren zur Herstellung einer Schicht, Schicht bzw. Schichtsystem und Verwendung des Bauelementes**

Optical element, method of fabricating a coating, coating or coating system and use of the optical element

Elément optique, méthode de fabrication d'une couche, couche ou structure à couches et utilisation de l'élément optique

(84) Benannte Vertragsstaaten:
**BE CH DE FR GB IT LI**

(30) Priorität: **21.12.1992 CH 390192**

(43) Veröffentlichungstag der Anmeldung:
**29.06.1994 Patentblatt 1994/26**

(73) Patentinhaber:
**BALZERS AKTIENGESELLSCHAFT**
**9496 Balzers (LI)**

(72) Erfinder:
**Rudigier, Helmut, Dr. Dipl.-Phys. ETH**
**CH-7310 Bad Ragaz (CH)**

(74) Vertreter:
**Troesch Scheidegger Werner AG**
**Patentanwälte,**
**Siewerdtstrasse 95,**
**Postfach**
**8050 Zürich (CH)**

(56) Entgegenhaltungen:
**EP-A- 0 513 662          DD-A- 120 190**
**GB-A- 2 252 333          JP-A- 62 270 774**

- **PATENT ABSTRACTS OF JAPAN vol. 14, no. 532 (M-1051) 22. November 1990 & JP-A-02 225 033 (NIPPON STEEL CORP.) 7. September 1990**
- **PATENT ABSTRACTS OF JAPAN vol. 12, no. 154 (C-495) 14. Mai 1988 & JP-A-62 270 074 (SUMITOMO ELECTRIC IND. LTD.) 25. November 1987**

## Beschreibung

Die Vorliegende Erfindung betrifft ein optisches Bauelement nach dem Oberbegriff von Anspruch 1, ein Verfahren zur Herstellung einer Schicht nach demjenigen von Anspruch 9, eine Schicht nach dem Wortlaut von Anspruch 13 und eine Verwendung des Bauelementes nach demjenigen von Anspruch 16.

Optische Bauelemente zur Beeinflussung der Transmission von Licht im sichtbaren Spektrum, mit mindestens einem Schichtsystem auf einem Substrat versehen, sind hinlänglichst bekannt, wie z.B. von beschichteten Gläsern. Die Wirkungsweise eines solchen optischen Bauelementes basiert auf dem Prinzip der Interferenz, und es ist deshalb mindestens ein Uebergang zwischen einem hoch- und einem niedrigbrechenden Material vorgesehen.

Folgende Definitionen werden verwendet:

Spektrum des sichtbaren Lichtes:

Spektralbereich entsprechend einer Lichtwellenlänge von 380nm bis 780nm.

Extinctionskonstante:

Wenn Licht der Intensität $I_o$ auf ein Material der Dicke d auftritt und ausgangsseitig die Intensität I ist, so gilt:

$$I = I_o \exp(-\alpha(\lambda)\, d) \qquad (1)$$

mit

$$k(\lambda) = \alpha(\lambda) \cdot \frac{\lambda}{4\pi} \qquad (2)$$

worin $\lambda$ die Wellenlänge des auftreffenden Lichtes ist, $k(\lambda)$ als Extinctionskonstante bezeichnet wird und $\alpha(\lambda)$ als Absorpitionskoeffizient.

Gemittelte Extinctionskonstante k:

In einem betrachteten Spektralbereich zwischen einer unteren Wellenlänge $\lambda_u$ und einer oberen $\lambda_o$ gilt für die mittlere Extinctionskonstante $\bar{k}$:

$$\bar{k} = \frac{1}{\Delta\lambda} \int_{\lambda_u}^{\lambda_o} k(\lambda)d\lambda \qquad (3)$$

mit

$$\Delta\lambda = \lambda_o - \lambda_u \qquad (4)$$

Transmission: (an einer Schicht)

Aus (1) ergibt sich die Transmission T für Licht der Wellenlänge zu

$$T(\lambda) = \frac{I}{I_o} = \exp(-\alpha(\lambda) \cdot d) \qquad (5)$$

Während mithin die Extinctionskonstante k eine Materialkonstante ist, ist die Transmission von der Dicke d des betrachteten Materials abhängig. Bei einem Mehrschichtsystem gilt:

$$T = \frac{I}{I_o} \,.$$

Gemittelte Transmission:

Für die gemittelte Transmission $\bar{T}$ in einem Spektralband entsprechend einer unteren Wellenlänge $\lambda_u$ und einer oberen $\lambda_o$ gilt:

$$\bar{T} = \frac{1}{\Delta\lambda} \int_{\lambda_u}^{\lambda_o} T(\lambda)d\lambda \qquad (6)$$

Für optische Bauelemente, welche im sichtbaren Spektralbereich einzusetzen sind, sind die einzelnen Schichten typischerweise dünner als 100nm.

Als Schichtmaterialien solcher im sichtbaren Spektralbereich wirksamer Schichten werden hauptsächlich Oxide der Gruppe IVa, wie $TiO_2$, $ZrO_2$, $HfO_2$, der Gruppe IVb, hier insbesondere $SiO_2$, der Gruppe IIIa, wie $Al_2O_3$, $Y_2O_3$, $Sc_2O_3$, weiter der Gruppe Va, wie $Ta_2O_5$, $Nb_2O_3$, und Oxide bzw. Fluoride einiger seltener Erden, wie z.B. $CeO_2$, $LaF_2$, sowie Fluoride der Gruppen IIa und Bleifluorid sowie Siliciumnitrid eingesetzt. Dabei können einige dieser Materialien noch in verschiedenen Modifikationen hergestellt werden, welche vornehmlich durch Herstellungsparameter, wie "Beschichtungstemperatur", Energie der schichtbildenden Teilchen, bestimmt werden, welche Modifikationen ihrerseits unterschiedliche Härten ergeben.

Die Härte der Schichten aus den erwähnten Materialien, welche üblicherweise durch Aufdampfen hergestellt werden, ist relativ gering, oft geringer als die Knoop-Härte $HK_{50g}$ von Maschinenglas, die ca. 650 beträgt.

Materialien, wie sie in einem anderen Teilgebiet der Beschichtungstechnik, nämlich als Verschleissschutzschichten für Werkzeuge eingesetzt werden, sind die Nitride, Karbide und Karbonitride der Gruppen IVa, Va und VIa, weiter Nitride von Ti, Al oder $Al_2O_2$, BN und Diamant. Verschleisschutzbietende, harte Schichtsysteme müssen hierzu eine Gesamtdicke $\geq$ 100nm aufweisen.

Während Verschleissschutz-Schichtsysteme der angegebenen Minimaldicke, bestehend aus den angegebenen Schichtmaterialien, mit Ausnahme von BN und Diamant, eine mittlere Extinctionskonstante, gemittelt in einem beliebigen Spektralband, von mindestens 10nm innerhalb des sichtbaren Lichtspektrums aufweisen, die wesentlich grösser ist als $5 \cdot 10^{-2}$, und Schichtsysteme der angegebenen Dicke eine gemittelte Transmission aufweisen im erwähnten Spektralband, die wesentlich kleiner ist als 10% sind BN- und Diamantschichten für optische Zwecke im sichtbaren Spektralbereich und mit kommerziell vertretbarem Aufwand derzeit nicht einsetzbar.

Aus der GB-A-2 252 333 ist ein optisches Bauelement mit einer Hartstoffschicht sowie einer Gleitschicht bekannt. Als Material der Hartstoffschicht wird beispielsweise Zirkonoxid, Aluminiumnitrid, Bornitrid oder Diamant eingesetzt, während als Gleitschichtmaterial, nebst Diamant, Polyethylen, Silikonpolymere etc. vorgeschlagen werden. Die Hartstoffschicht wird mit einer Dicke von 50 bis 10000 nm abgetragen, die Gleitschicht mit einer Dicke zwischen 5 und 5000 nm. Es wird von der Erkenntnis ausgegangen, dass die Gleitschutzschicht das optische Bauelement bezüglich Verschleiss, so gegen Kratzen und andere Formen des Verschleisses, schützt, während die Hartstoffschicht das optische Bauelement gegen mechanische Beeinträchtigungen, die durch die Gleitschicht hindurchwirken, schützt.

Aus der EP-A-0 513 662 ist es bekannt, Werkstücke, dabei insbesondere spanabhebende Werkzeuge, beispielsweise durch Ionenplattieren, mit einer $(Al, Cr)_2O_3$-Schicht als Verschleissschutzschicht zu beschichten.

Die vorliegende Erfindung setzt sich zur Aufgabe, ein optisches Bauelement eingangs genannter Art zu schaffen, bei welchem kostengünstig sowohl ein hoher Verschleissschutz wie auch die geforderten optischen Eigenschaften gewährleistet sind.

Dies wird bei dessen Ausbildung nach dem kennzeichnenden Teil von Anspruch 1 erreicht.

Dabei wird als Verschleissschutzsystem die Gesamtheit aller Schichten, die aus dem erwähnten Material bestehen, bezeichnet, deren Anzahl minimal eine Schicht ist, und insbesondere unabhängig davon, ob zwischen diesen Schichten noch weitere Schichten zur Erzielung eines erwünschten optischen Effektes vorgesehen sind, die aber selbst keine oder vernachlässigbare Verschleissschutzwirkung erbringen. Selbstverständlich kann das erwähnte Substrat zweiseitig oder einseitig erfindungsgemäss ausgebildet sein, wobei sich aber auch im folgenden die angegebenen Werte bezüglich mittlerer Transmission auf ein einseitig beschichtetes Substrat bzw. auf ein einziges Verschleissschutzsystem beziehen.

Es gelingt mithin erstaunlicherweise, ein Verschleissschutzsystem aus mindestens einer Verschleissschutzschicht zu realisieren, aus einem Material, wie es bis anhin zum Verschleissschutz an Werkzeugen eingesetzt wird, wobei aber, trotz Einhaltens der für den Verschleissschutz notwendigen Minimaldikke des Verschleissschutzsystems, erfindungsgemäss die erwähnte minimale mittlere Transmission erreicht wird. Damit wird ein optisches Bauelement mit Schichten realisiert, die bis anhin nur zum Verschleissschutz an Teilen eingesetzt wurden, wie an Werkzeugen, die weitab vom Typus "optischer Bauelemente" liegen.

Dem Wortlaut von Anspruch 2 folgend, ist das Spektralband gar, wesentlich breiter als 10nm, vorzugsweise mindestens 100nm oder erstreckt sich gar über einen wesentlichen Teil des sichtbaren Lichtspektrums.

Im weiteren wird, dem Wortlaut von Anspruch 3 folgend, am optischen Bauelement vorzugsweise ein Glas als Substrat eingesetzt, wobei die Härte mindestens einer der Schichten des Verschleissschutzsystems grösser ist als diejenige des Glases. Damit wird erreicht, dass das Glas durch besagte, mindestens eine Schicht gegen Verschleiss geschützt wird, und zwar grundsätzlich unabhängig davon, ob über dieser erwähnten Schicht und/oder zwischen ihr und der Glasoberfläche weitere Schichten vorgesehen sind oder nicht. Wesentlich ist, dass die genannte Schicht, wie überhaupt das erfindungsgemäss vorgesehene Verschleissschutzsystem, eine angestrebte optische Wirkung, beispielsweise eines zusätzlich vorgesehenen Schichtsystems, nur unmassgeblich verschlechtert, ja sie sogar verbessern kann.

Als heute bevorzugtes weiteres Schichtmaterial im erfindungsgemäss vorgesehenen Verschleissschutzsystem ist $ZrO_2$, zu bezeichnen.

Dadurch, dass im weiteren, und dem Wortlaut von Anspruch 4 folgend, die Gesamtdicke des Verschleissschutzsystems mindestens 1μm, vorzugsweise gar mindestens 1,5μm oder gar mindestens 2μm beträgt, wird die Verschleissschutzwirkung des Systems massgeblich erhöht und trotzdem nicht verunmöglicht, die angestrebten optischen Eigenschaften zu realisieren.

Eine bevorzugte Ausführungsvariante des Verschleissschutzsystems nach dem Wortlaut von Anspruch 5 weist mindestens eine Schicht aus $ZrO_2$ auf, vorzugsweise mit einer Härte von mindestens 1000 Vickers, vorzugsweise gar von mindestens 1200 Vickers auf.

In heute weitaus bevorzugter Art und Weise, weist das erfindungsgemäss vorgesehene Verschleissschutzsystem mindestens eine Schicht aus dem erwähnter Material auf, welche durch Ionenplattieren hergestellt ist. Bevorzugterweise werden alle die erwähnten Schichten aus den genannten Materialien durch Ionenplattieren hergestellt.

Beim Einsatz einer $ZrO_2$-Schicht der oben angegebenen Härte hat es sich gezeigt, dass aber unabhängig vom Herstellungsverfahren, also auch bei Herstellung nicht mittels Ionenplattierens, bezüglich der Druckspannung in der Schicht bevorzugterweise der in Anspruch 6 spezifizierte Bereich eingehalten werden soll. Der Vorteil, die erwähnten Schichten aber mittels Ionenplattierens herzustellen, liegt insbesondere darin, dass mit diesem Verfahren relativ tiefe Temperaturen eingehalten werden können, so von unter 900°C bis hinunter zu ca. 450°C und weniger, und dies insbesondere für die Herstellung von $(Al,Cr)_2O_3$-Schichten, woran die Alphaphase durch Cr-Beimischung stabilisiert wird.

Dank der eingehaltenen tiefen Temperaturen durch Ionenplattieren ist die Beschichtung von Glassubstraten ohne weiteres möglich.

Aufgrund der Tatsache, dass die bevorzugterweise erfindungsgemäss eingesetzte $(Al,Cr)_2O_3$-Schicht niedrigbrechend ist und die ebenso bevorzugterweise erfindungsgemäss eingesetzte $ZrO_2$-Schicht hochbrechend, lässt sich in bevorzugter Art und Weise das optische Bauelement nach dem Wortlaut von Anspruch 7 aufbauen.

Grundsätzlich kann aber ein erfindungsgemässes Bauelement nebst dem genannten Verschleissschutzsystem weitere Schichten - im Verschleissschutzsystem zwischengelagert, ihm über- oder unterlagert - aufweisen, so dass das Verschleissschutzsystem Teil eines Gesamtschichtsystems am Substrat wird, dies auch nach dem Wortlaut von Anspruch 7.

Dabei kann dem Wortlaut von Anspruch 8 folgend zusätzlich eine Metallschicht bzw. eine metallische Schicht vorgesehen sein, wie beispielsweise eine Silber-, Gold-, Titan-Nitrid- oder Hafnium-Nitrid-Schicht. Dabei werden diese Schichten zur Erzielung eines gewünschten Transmissions- bzw. Reflexionsverhaltens eingesetzt, nicht zum Zwecke des Verschleissschutzes.

Das erfindungsgemässe Verfahren für die Herstellung einer Schicht aus $(Al,Cr)_2O_3$ mit den angegebenen optischen Eigenschaften zeichnet sich nach dem Wortlaut von Anspruch 9 aus und besteht, wie erläutert wurde, darin, eine solche Schicht durch Ionenplattieren herzustellen.

Erst dadurch, dass die mittlere Extinctionskonstante der erwähnten Materialien, abgelegt nach dem genannten Verfahren, den angegebenen Maximalwert nicht überschreitet, wird überhaupt ermöglicht, Schichten der genannten Materialien einzusetzen, deren verschleissschutznotwendige Dicke von mehr als 100nm trotzdem eine gemittelte Gesamttransmission von mindestens 10% ergibt. Dies sogar, wenn nach dem erfindungsgemässen Verfahren und Wortlaut von Anspruch 11 die Gesamtdicke von ein, zwei oder mehr erfindungsgemäss hergestellter Schichten 1μm oder gar 1,5μm oder gar 2μm erreicht oder überschreitet.

Wie bereits erwähnt wurde, ist es gelungen, Schichten aus den erwähnten Materialien und insbesondere aus $(Al,Cr)_2O_3$ herzustellen bzw. Schichtsysteme aus solchen Schichten, welche als Verschleissschutz optisch wirksam an einem Bauelement wirken.

Mithin zeichnet sich eine erfindungsgemässe Schicht aus $(Al,Cr)_2O_3$ nach dem Wortlaut von Anspruch 13 aus, indem sie den erwähnten Einsatz erst dadurch ermöglicht, dass die schichtmaterialspezifische gemittelte Extinctionskonstante höchstens $5 \cdot 10^{-2}$ beträgt.

Bevorzugte Ausführungsvarianten der genannten Schicht bzw. eines Schichtsystems mit einer, zwei oder mehr solcher Schichten zeichnen sich nach dem Wortlaut der Ansprüche 14 bzw. 15 aus.

Eine solche Schicht bzw. ein solches Schichtsystem wird bevorzugterweise auf Glas, Kunststoff oder einem Metall oder Halbleiter als Trägersubstrat abgelegt und insbesondere, auf Glas abgelegt, für Uhrengläser, bar-code-scanner oder Schweissschutzeinrichtungen.

Die Erfindung wird anschliessend beispielsweise anhand von Beispielen und Figuren erläutert.

Die Figuren zeigen:

Fig. 1     den Verlauf des Reflexionskoeffizienten an einem gemäss Beispiel 1 aufgebauten erfindungsgemässen optischen Bauelement (b).

Fig. 2     den Verlauf des Reflexionskoeffizienten an einem gemäss Beispiel 2 aufgebauten erfindungsgemässen optischen Bauelement;

Fig. 3     den Verlauf des Reflexionskoeffizienten an einem gemäss Beispiel 3 aufgebauten erfindungsgemässen optischen Bauelement;

Fig. 4     den Verlauf der Absorption in % einer erfindungsgemässen Schicht bei 1μm und 2μm Dicke über den sichtbaren Licht-Spektralbereich,

Fig. 5     eine für die Herstellung der Schichten gemäss den Beispielen 1 bis 3 bevorzugterweise eingesetzte Anlagenkonfiguration.

Definition:

Wenn im folgenden die Härte von Schichten angegeben ist, die dünner sind als 1,5μm so wurde diese Härte an einer identischen Schicht höherer Dicke gemessen. Die Angaben bei Schichten von 1,5μm und mehr wurden direkt an der Schicht gemessen.

Beispiel 1

| Substrat: | Glas (Brechungsindex n = 1,52) Härte: 650 $HK_{50g}$ |
|---|---|
| erste Schicht: | 3,2μm $(Al,Cr)_2O_3$ Härte: 2200 $HV_{15g}$ |
| zweite Schicht: | 62,5nm $ZrO_2$ |

Härte: 1150 $HV_{15g}$

dritte Schicht: 81nm $(Al,Cr)_2O_3$

Umgebungsmedium: Luft

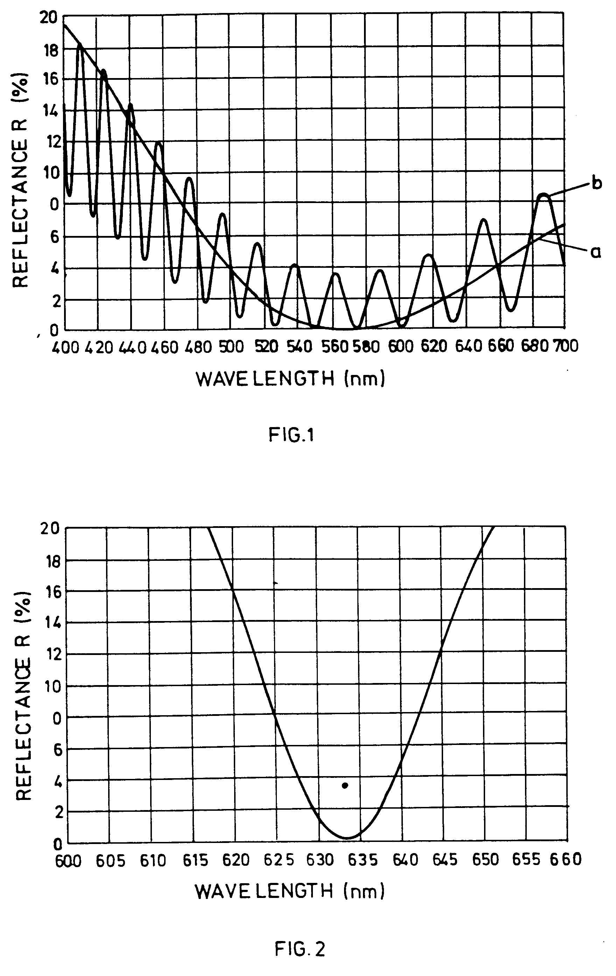

In Fig. 1 bezeichnet der Kurvenverlauf 'a' das Verhalten eines optischen Bauelementes gemäss Beispiel 1, jedoch ohne erste Schicht, während Kurvenverlauf 'b' das optische Verhalten des erfindungsgemässen Bauelementes mit der ersten, den Verschleissschutz gewährleistenden Schicht darstellt.

Beispiel 2:

Substrat: Glas (Brechungsindex n = 1,52)
Härte: 650 $HK_{50g}$

erste Schicht: 198nm $ZrO_2$
Härte: 2200 $HV_{15g}$

zweite Schicht: 2µm $(Al,Cr)_2O_3$
Härte: 1150 $HV_{15g}$

Umgebungsmedium: Luft

Das Reflexionsverhalten dieses erfindungsgemässen Bauelementes ist in Fig. 2 dargestellt. Es ergibt sich eine Reflexion bei 633nm von 0,065%. Ohne dicke Verschleissschutzschicht aus $(Al,Cr)_2O_3$ beträgt die Reflexion bei 633nm 4,2%.

Beispiel 3:

Substrat: Glas (Brechungsindex n = 1,52)
Härte: 650 $HK_{50g}$

erste Schicht: 3,2µm $(Al,Cr)_2O_3$
Härte: 1150 $HK_{50g}$

zweite Schicht: 3,8nm $ZrO_2$
Härte: 2200 $HV_{15g}$

dritte Schicht: 61nm $(Al,Cr)_2O_3$
Härte: 1150 $HV_{15g}$

vierte Schicht: 59nm $ZrO_2$
Härte: 2200 $HV_{15g}$

fünfte Schicht: 70nm $(Al,Cr)_2O_3$
Härte: 1150 $HV_{15g}$

Umgebungsmedium: Luft

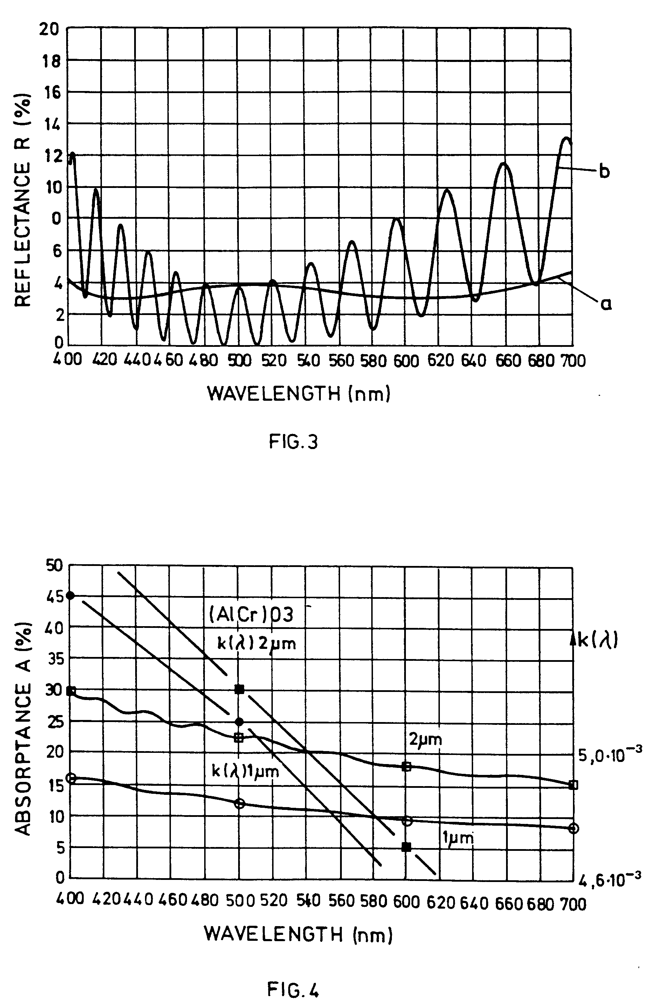

Das Reflexionsverhalten des optischen Bauelementes gemäss Beispiel 3 ist in Fig. 3 dargestellt, wobei der Verlauf 'a' den Verlauf am selben Bauelement, jedoch ohne erste Schicht darstellt, während Verlauf 'b' den Reflexionsverlauf am erfindungsgemäss mit erster Schicht versehenen Bauelement darstellt.

In Fig. 4 ist die Absorption $A(\lambda)$, definiert durch das prozentual vom einfallenden Licht $I_o$ absorbierte Licht $I_A$ über den wesentlichsten Spektralbereich des sichtbaren Lichtes dargestellt, für eine 1µm und eine 2µm dicke $(Al, Cr)_2O_3$-Schicht.

Die 2µm-Schicht absorbiert maximal ca. 30% die 1µm-Schicht maximal ca. 16%.

Daraus ergibt sich im ganzen dargestellten Spektralbereich für die Schichten, entsprechend

$$1 = A(\lambda) + T(\lambda) \qquad (7)$$

eine Transmission $T(\lambda)$ von mehr als 70% bzw. mehr als 84% an einem entsprechend 1µm- bzw. 2µm-dicken Verschleissschutzsystem gemäss dem Beispiel 2. Die Transmission $T(\lambda)$ für 3µm-dicke Schichten wird demnach mehr als ca. 50% gemäss den Beispielen 1 und 3.

Aus

$$A(\lambda) = \frac{I_A}{I_o} = 1 - e^{-\alpha(\lambda) \cdot d} \qquad (8)$$

und mit (2) ergeben sich für die $k(\lambda)$-Werte die rechnerisch abgeschätzten Werte, die in Fig. 3 ebenfalls abgetragen sind:

Die $k(\lambda)$-Werte sind wesentlich kleiner als $5 \cdot 10^{-2}$, ja wesentlich kleiner als $10^{-2}$ im ganzen betrachteten Spektralbereich.

Für 400nm ergibt sich

$$k_{2\mu m}(400) \approx 5,7 \cdot 10^{-3}$$

$$k_{1\mu m}(400) \approx 5,5 \cdot 10^{-3}$$

je als Maximalwert.

Damit ist im betrachteten Spektralband mit einer Breite von wesentlich mehr als 10nm die erfindungsgemäss geforderte mittlere Transmission des Verschleissschutzsystems und für das Schichtmaterial, die höchstzulässige, geforderte mittlere Extinctionskonstante bei weitem eingehalten.

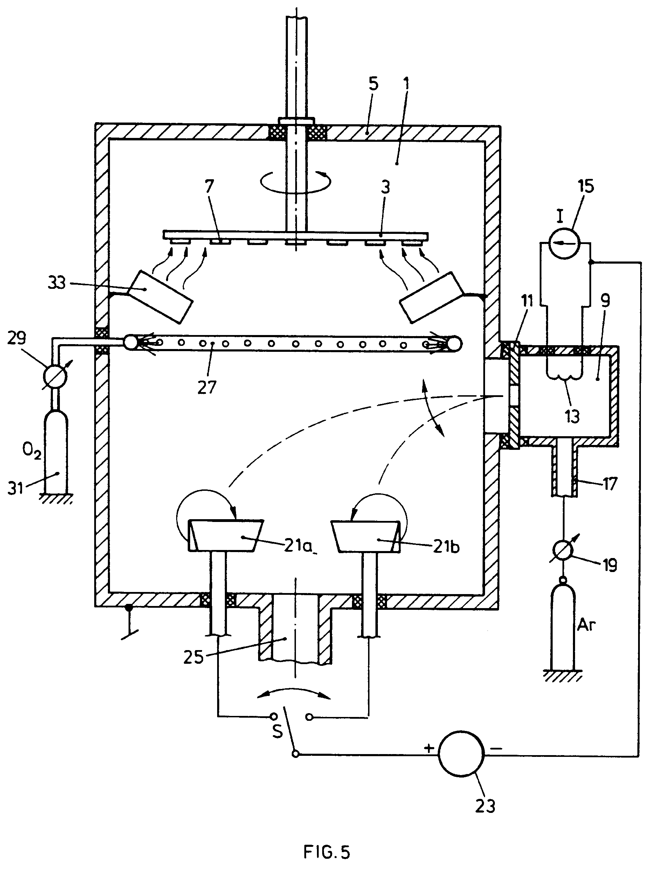

Bei den oben erwähnten Beispielen wurde sowohl die $(Al,Cr)_2O_3$-Schicht wie auch die $ZrO_2$-Schicht mit der anschliessend beschriebenen Anlage, wie sie in Fig. 5 schematisch dargestellt ist, abgelegt. Es handelt sich dabei um eine an sich bekannte Ionenplattieranlage des Typs BAP800, wie von der Anmelderin hergestellt. Sie umfasst einen Vakuumrezipienten 1 mit einer Werkstückträgerkalotte 3, die, elektrisch isoliert, drehgetrieben an der Wandung 5 des Rezipienten 1 montiert ist. Sie trägt Werkstücke 7. Zur Erzeugung einer Niederspannungs-Bogenentladung ist an der Wandung 5 des Rezipienten 1 eine Ionisationskammer 9 angeflanscht, die über eine Blende 11 sowohl bezüglich der Wandung 5 wie auch bezüglich der Wandung der Ionisationskammer 9, elektrisch isoliert, mit dem Innern des Rezipienten 1 kommuniziert.

In der Ionisationskammer 9 ist eine Elektronenemissionskathode 13 in Form einer Heisskathode vorgesehen, angeschlossen an einen Heizstromgenerator 15. In die Ionisationskammer 9 wird über einen Anschluss 17 ein Arbeitsgas, vorzugsweise Argon, über ein Stellventil 19 eingelassen. Es bilden ein oder, wie dargestellt, zwei oder mehr selektiv aufschaltbare Elektronenstrahl-Verdampfungseinrichtungen 21a und 21b die jeweils aktivierten Anoden der Niederspannungs-Entladungsstrecke. Sie sind, wie schematisch mit dem Schalter S dargestellt, selektiv bezüglich der Heisskathode 13 auf anodisches Potential über Quelle 23 legbar. Nebst einem Evakuierungsanschluss 25 für eine Vakuumpumpe ist im Rezipienten 1 eine Reaktivgas-Auslassanordnung 27 vorgesehen, im hier angesprochenen Fall angeschlossen, über eine Stellventilanordnung 29, an einen Sauerstofftank 31. Im weiteren sind im Bereich der Drehkalotte 3 Heizstrahler 33 vorgesehen.

Mit einer derartigen Anlage wurde die erfindungsgemässe Verschleissschutzschicht $(Al,CR)_2O_3$ gemäss den Beispielen 1 bis 3 wie folgt hergestellt:

Betrieb:

- Verdampfen von (Al,Cr) mittels einer der vorgesehenen Elektronenstrahl-Verdampfereinrichtungen, z.B. 21a.
- Verdampfter Feststoff (Al,Cr) mit 67,5 Gew% Al und 32,5 Gew% Cr.
- Argondruck: $3 \cdot 10^{-4}$ mbar;
- Sauerstoffpartialdruck: $3 \cdot 10^{-4}$ mbar;
- Bogenstrom der Niederspannungsentladung: 80A;
- Substrattemperatur: $T \leq 450°C$;
- Beschichtungsrate: 0,25nm/sec;
- Substratbias: Substrat elektrisch auf Schwebepotential;
- Bogenspannung der Niederspannungs-Bogenentladung an Generator 23: 60V DC.

Für die Herstellung der $ZrO_2$-Schicht wurde an den Beispielen 1 bis 3 wie folgt vorgegangen:

- Verdampfen von Zr als Feststoff an der zweiten Elektronenstrahl-Verdampfereinrichtung z.B. 21b;
- Argondruck: $10^{-3}$ mbar;
- Sauerstoffpartialdruck: $7 \cdot 10^{-4}$ mbar;
- Bogenstrom der Niederspannungs-Bogenentladung: 50A;
- Bogenspannung dieser Entladung: 60V;
- Substrattemperatur: $T \leq 350°C$;
- Beschichtungsrate: 0,3nm/sec;
- Substratbias: isoliertes Substrat auf Schwebepotential.

In den Beispielen bezeichnen weiter die Grössen HK die Knoop-Härte und HV die Vickers-Härte.

Die an den genannten Beispielen aufgeführten und, wie beschrieben wurde, hergestellten $ZrO_2$-Schichten weisen bei 633nm Wellenlänge einen Brechungsindex n = 2,17 auf und eine Extinctionskonstante k (633nm) $< 8 \cdot 10^{-4}$.

Die, wie beschrieben wurde, hergestellte $(Al,Cr)_2O_3$-Schichten an den aufgeführten Beispielen weisen bei einer Wellenlänge von 550nm einen Brechungsindex zwischen 1,8 und 1,9 auf und bei dieser Wellenlänge eine Extinctionskonstante k (550nm) $< 5 \cdot 10^{-3}$.

Dank des erzielten hohen Verschleissschutzes an den erfindungsgemässen optischen Bauelementen lassen sich diese insbesondere auch für Anwendungen einsetzen, bei welchem Glas, wie Klarglas, Grünglas, Quarzglas etc., Metalle oder Halbleiter verschleissgeschützt werden sollen, d.h. das erfindungsgemässe optische Bauelement und/oder insbesondere die erfindungsgemässe optisch transparente Verschleissschutzschicht wird typischerweise für Uhrengläserbeschichtungen, bar-code-scanner-Abdekkungen, Anwendungen im Rahmen von Schweissschutzeinrichtungen etc. eingesetzt, mithin grundsätzlich für Anwendungen, bei welchen solche Elemente starken Verschleisserscheinungen ausgesetzt sind, indem sie beispielsweise in der industriellen Fertigung und entsprechend rauhen Umgebungsverhältnissen eingesetzt werden, und die trotzdem ihr optisches Verhalten beibehalten sollen.

**Patentansprüche**

1.   Optisches Bauelement mit mindestens einem Verschleissschutz schichtsystem auf einem Substrat, wobei das Verschleissschutzsystem eine Gesamtdicke von mindestens 100nm, eine mittlere Extinktionskonstante in einem Spektralband der Breite von mindestens 10nm innerhalb des sichtbaren Lichtspektrums zwischen 380nm und 780nm von höchstens $5 \cdot 10^{-2}$ und dabei eine mittlere Transmission im genannten Spektralband von mindestens 10 % aufweist, dadurch gekennzeichnet, dass das Verschleissschutzsystem mindestens eine Schicht aus $(Al,Cr)_2O_3$ umfasst.

2.   Bauelement nach Anspruch 1, dadurch gekennzeichnet, dass das Band wesentlich breiter als 10nm ist, vorzugsweise mindestens 100nm.

3.   Bauelement nach Anspruch 1, dadurch gekennzeichnet, dass das Substrat aus einem Glas, einem Kunststoff, Metall oder Halbleiter besteht.

4. Bauelement nach einem der Ansprüche 1 bis 3, dadurch gekennzeichnet, dass die Gesamtdicke des Verschleissschutzsystems mindestens 1μm, vorzugsweise mindestens 1,5μm beträgt, vorzugsweise gar mindestens 2μm.

5. Bauelement nach mindestens einem der Ansprüche 1 bis 4, dadurch gekennzeichnet, dass das Verschleissschutzsystem weiter mindestens eine Schicht aus $ZrO_2$ umfasst, vorzugsweise mit einer Härte von mindestens 1000 Vickers, vorzugsweise gar von mindestens 1200 Vickers.

6. Bauelement nach Anspruch 5, dadurch gekennzeichnet, dass die Druckspannung σ in der $ZrO_2$-Schicht

$$- 5,5 \cdot 10^{-18} \, N/m^2 \leq \sigma \leq 10^{-18} \, N/m^2$$

$$(- 5,5 \cdot 10^{-9} \, dyn/cm^2 \leq \sigma \leq 10^{-9} \, dyn/cm^2)$$

beträgt.

7. Bauelement nach mindestens einem der Ansprüche 1 bis 6, dadurch gekennzeichnet, dass das Verschleissschutzsystem Teil eines Schichtsystems aus Schichten hoch- und niedrigbrechender Materialien bildet.

8. Bauelement nach einem der Ansprüche 1 bis 7, dadurch gekennzeichnet, dass zusätzlich zum Verschleissschutzsystem mindestens eine metallische Schicht vorgesehen ist.

9. Verfahren zur Herstellung einer Schicht von mindestens 100 nm Dicke und mit einer mittleren Extinctionskonstanten in einem Spektralband von mindestens 10nm innerhalb des sichtbaren Lichtspektrums von 380nm bis 780nm von höchstens 5 $\cdot$ $10^{-2}$ sowie einer gemittelten Gesamttransmission im genannten Spektralband von mindestens 10 % durch Ionenplattieren, dadurch gekennzeichnet, dass die Schicht aus $(Al,Cr)_2O_3$ besteht.

10. Verfahren nach Anspruch 9, dadurch gekennzeichnet, dass die Schicht mindestens als Teil eines Verschleissschutz-Schichtsystems auf einem Substrat eines optischen Bauelementes abgelegt wird.

11. Verfahren nach Anspruch 10, dadurch gekennzeichnet, dass das Verschleissschutz-Schichtsystem mit einer Gesamtdicke von mindestens 1μm, vorzugsweise von 1,5μm oder gar von 2μm abgelegt wird.

12. Verfahren nach mindestens einem der Ansprüche 10 oder 11, dadurch gekennzeichnet, dass mindestens eine Schicht aus $ZrO_2$ durch Ionenplattieren abgelegt wird mit einer Vickershärte von mindestens 1000, vorzugsweise von mindestens 1200.

13. Schicht für ein Verschleissschutz schichtsystem eines optischen Bauelements mit einer gemittelten Extinctionskonstante von höchstens 5 $\cdot$ $10^{-2}$ und zwar gemittelt über einem Spektralband von mindestens 10nm innerhalb des sichtbaren Lichtspektrums zwischen 380nm und 780nm, einer Dicke von mindestens 100 nm und einer mittleren Transmission im genannten Spektralband von mindestens 10 %, dadurch gekennzeichnet, dass die Schicht aus $(Al,Cr)_2O_3$ besteht.

14. Schichtsystem, bestehend aus mindestens einer Schicht nach Anspruch 13, dadurch gekennzeichnet, dass es eine Gesamtdicke von mindestens 1μm, vorzugsweise von 1,5μm oder gar von 2μm, aufweist.

15. Schichtsystem nach Anspruch 14, dadurch gekennzeichnet, dass mindestens eine Schicht aus $ZrO_2$ vorgesehen ist mit einer Vickershärte von mindestens 1000, vorzugsweise von mindestens 1200 aufweist.

16. Verwendung des optischen Bauelementes nach einem der Ansprüche 1 bis 8 als Uhrenglas, barcode-scanner oder Schweissschutzeinrichtung.

**Claims**

1. Optical construction element with at least one wear protection layer system on a substrate, where the wear protection system has a total thickness of at least 100 nm, a mean extinction constant of maximum 5.$10^{-2}$ in a spectrum band of width at least 10 nm within the visible light spectrum between 380 nm and 780 nm, and a mean transmission of at least 10% in the said spectrum band, characterised in that the wear protection system comprises at least one layer of $(Al,Cr)_2O_3$.

2. Construction element according to claim 1, characterised in that the band is essentially wider than 10 nm, preferably at least 100 nm.

3. Construction element according to claim 1, characterised in that the substrate consists of a glass, a plastic, metal or semi-conductor.

4. Construction element according to any of claims 1 to 3, characterised in that the total thickness of the wear protection system is at least 1 μm, preferably at least 1.5μm, preferably even at least 2 μm.

**5.** Construction element according to at least one of claims 1 to 4, characterised in that the wear protection system also comprises at least one layer of $ZrO_2$, preferably with a hardness of at least 1000 Vickers, preferably even at least 1200 Vickers.

**6.** Construction element according to claim 5, characterised in the compressive strain $\sigma$ in the $ZrO_2$ layer is

$$-5.5 \cdot 10^{-18} \text{ N/m}^2 \leq \sigma \leq 10^{-18} \text{ N/m}^2$$

$$(-5.5 \cdot 10^{-9} \text{ dyn/cm}^2 \leq \sigma \leq 10^{-9} \text{ dyn/cm}^2).$$

**7.** Construction element according to at least one of claims 1 to 6, characterised in that the wear protection system forms part of a layer system of layers of materials with high and low refractive indices.

**8.** Construction element according to any of claims 1 to 7, characterised in that in addition to the wear protection system at least one metal layer is provided.

**9.** Process for production by ion plating of a layer of at least 100 nm thickness and with a mean extinction constant of maximum $5.10^{-2}$ in a spectrum band of at least 10 nm within the visible light spectrum from 380 nm to 780 nm and a mean total transmission of at least 10% in the said spectrum band, characterised in that the layer consists of $(Al,Cr)_2O_3$.

**10.** Process according to claim 9, characterised in that the layer is deposited at least as part of a wear protection layer system on a substrate of an optical construction element.

**11.** Process according to claim 10, characterised in that the wear protection layer system is deposited with a total thickness of at least 1 $\mu$m, preferably 1.5 $\mu$m or even 2 $\mu$m.

**12.** Process according to at least one of claims 10 or 11, characterised in that at least one layer of $ZrO_2$ is deposited by ion plating with a Vickers hardness of at least 1000, preferably at least 1200.

**13.** Layer for a wear protection layer system of an optical construction element with a mean extinction constant of maximum $5.10^{-2}$ determined over a spectrum band of at least 10 nm within the visible light spectrum between 380 nm and 780 nm, a thickness of at least 100 nm and a mean transmission of at least 10% in the said spectrum band, characterised in that the layer consists of $(Al,Cr)_2O_3$.

**14.** Layer system consisting of at least one layer according to claim 13, characterised in that it has a total thickness of at least 1 $\mu$m, preferably 1.5 $\mu$m or even 2 $\mu$m.

**15.** Layer system according to claim 14, characterised in that at least one layer of $ZrO_2$ is provided with a Vickers hardness of at least 1000, preferably at least 1200.

**16.** Use of the optical construction element according to any of claims 1 to 8 as a watch glass, barcode scanner or welding protection device.

**Revendications**

**1.** Elément optique comportant au moins un système de couches de protection d'usure sur un substrat, lequel système de protection d'usure présente une épaisseur totale d'au moins 100 nm, une constante d'extinction moyenne maximale de $5 \cdot 10^{-2}$ dans une bande spectrale d'une largeur d'au moins 10 nm à l'intérieur du spectre de lumière visible situé entre 380 nm et 780 nm, et une transmission moyenne dans cette bande spectrale d'au moins 10 %,
caractérisé en ce que le système de protection d'usure comprend au moins une couche de $(Al,Cr)_2O_3$.

**2.** Elément selon la revendication 1, caractérisé en ce que la bande a une largeur nettement supérieure à 10 nm, de préférence égale à au moins 100 nm.

**3.** Elément selon la revendication 1, caractérisé en ce que le substrat se compose d'un verre, d'une matière plastique, de métal ou d'un semi-conducteur.

**4.** Elément selon l'une des revendications 1 à 3, caractérisé en ce que l'épaisseur totale du système de protection d'usure est d'au moins 1 $\mu$m, de préférence d'au moins 1,5 $\mu$m, ou même d'au moins 2 $\mu$m.

**5.** Elément selon l'une au moins des revendications 1 à 4, caractérisé en ce que le système de protection d'usure comprend également au moins une couche de $ZrO_2$, de préférence d'une dureté d'au moins 1000 Vickers, de préférence même d'au moins 1200 Vickers.

**6.** Elément selon la revendication 5, caractérisé en ce que la tension de compression $\sigma$ dans la couche de $ZrO_2$ est de

$$-5,5 \cdot 10^{-18} \text{ N/m}^2 \leq \sigma \leq 10^{-18} \text{ N/m}^2$$

$$(-5,5 \cdot 10^{-9} \text{ dyn/cm}^2 \leq \sigma \leq 10^{-9} \text{ dyn/cm}^2).$$

**7.** Elément selon l'une au moins des revendications 1 à 6, caractérisé en ce que le système de protection d'usure forme une partie du système de couches formé de couches de matériaux à fort indice de réfraction et à faible indice de réfraction.

**8.** Elément selon l'une des revendications 1 à 7, caractérisé en ce qu'il est prévu, en plus du système de protection d'usure, au moins une couche métallique.

**9.** Procédé pour fabriquer une couche présentant une épaisseur d'au moins 100 nm, une constante d'extinction moyenne maximale de $5 \cdot 10^{-2}$ dans une bande spectrale d'au moins 10 nm à l'intérieur du spectre de lumière visible situé entre 380 nm et 780 nm, et une transmission totale moyenne dans cette bande spectrale d'au moins 10 %, par placage ionique,
caractérisé en ce que la couche se compose de $(Al,Cr)_2O_3$.

**10.** Procédé selon la revendication 9, caractérisé en ce que la couche est déposée au moins comme une partie d'un système de couches de protection d'usure sur un substrat d'un élément optique.

**11.** Procédé selon la revendication 10, caractérisé en ce que le système de couches de protection d'usure est déposé avec une épaisseur totale d'au moins 1 μm, de préférence de 1,5 μm ou même de 2 μm.

**12.** Procédé selon la revendication 10 ou 11, caractérisé en ce qu'au moins une couche de $ZrO_2$ est déposée par placage ionique, avec une dureté Vickers d'au moins 1000, de préférence d'au moins 1200.

**13.** Couche pour un système de couches de protection d'usure d'un élément optique, présentant une constante d'extinction moyenne maximale de $5 \cdot 10^{-2}$ dans une bande spectrale d'au moins 10 nm à l'intérieur du spectre de lumière visible situé entre 380 nm et 780 nm, une épaisseur d'au moins 100 nm et une transmission moyenne dans cette bande spectrale d'au moins 10 %, caractérisée en ce qu'elle se compose de $(Al,Cr)_2O_3$.

**14.** Système de couches composé d'au moins une couche selon la revendication 13, caractérisé en ce qu'il présente une épaisseur totale d'au moins 1 μm, de préférence de 1,5 μm ou même de 2 μm.

**15.** Système de couches selon la revendication 14, caractérisé en ce qu'il est prévu au moins une couche de $ZrO_2$ d'une dureté Vickers d'au moins 1000, de préférence d'au moins 1200.

**16.** Utilisation de l'élément optique selon l'une des revendications 1 à 8 comme verre de montre, lecteur de codes barres ou dispositif de protection de soudage.

FIG.1

FIG.2

FIG.3

FIG.4

FIG. 5